# EUROPÄISCHE PATENTANMELDUNG

(11) **EP 1 902 815 A2**
(43) Veröffentlichungstag der Anmeldung: **26.03.2008**
(21) Anmeldenummer: 07017622.7
(22) Anmeldetag: 08.09.2007
(51) Int. Cl.: B23Q 7/04, B23Q 41/02

(54) **Bearbeitungslinie mit mehreren Transportvorrichtungen**

(30) Priorität: 20.09.2006 DE 102006044723; 21.02.2007 DE 102007008480
(71) Anmelder: Grob, Margret, 86825 Bad Wörishofen (DE)
(72) Erfinder: Grob, Burkhart, 86825 Bad Wörishofen (DE)
(74) Vertreter: Schulz, Manfred

(57) **Zusammenfassung**

Die Erfindung betrifft eine Bearbeitungslinie, insbesondere eine Transferstraße oder eine Montagelinie, bestehend aus einer Vielzahl von Bearbeitungsstationen (2a,2b), die in der Bearbeitungsrichtung hintereinander angeordnet sind und die Bearbeitungsstation für die Bearbeitung von Werkstücken (3) dient, wobei mindestens eine Bearbeitungsstation als Sondermaschine ausgebildet ist. Die Erfindung zeichnet sich dadurch aus, daß zwischen zwei benachbarten Bearbeitungsstationen je eine Transportvorrichtung (4a,4b) vorgesehen ist.

## Beschreibung

Die Erfindung betrifft eine Bearbeitungslinie, insbesondere eine Transferstraße oder eine Montagelinie, bestehend aus einer Vielzahl von Bearbeitungsstationen, die in der Bearbeitungsrichtung hintereinander angeordnet sind und die Bearbeitungsstation für die Bearbeitung von Werkstücken dient, wobei mindestens eine Bearbeitungsstation als Sondermaschine ausgebildet ist.

Eingangs beschriebene Bearbeitungslinien sind, wie erwähnt, zum Beispiel als Transferstraßen im Stand der Technik hinlänglich bekannt.

Transferstraßen zeichnen sich dabei dadurch aus, daß die Werkstücke der Reihe nach von als Sonderwerkzeugmaschinen ausgebildeten Bearbeitungsstationen bearbeitet werden und der Transport beziehungsweise Transfer der einzelnen Werkstücke zwischen den einzelnen Bearbeitungsstationen durch eine Transferstange oder einen Transferbalken gleichzeitig für alle Werkstücke erfolgt. Dieses im Stand der Technik bewährte Konzept ist aber ungünstig im Hinblick auf den Energieverbrauch. Aufgrund der fest vorgegebenen Transportsequenz, bei welcher alle Werkstücke um eine Station weitertransportiert werden, müssen alle Werkstücke zum gleichen Zeitpunkt von der Spannvorrichtung hydraulisch gespannt werden. Hieraus folgt, daß zu einem gewissen Zeitpunkt eine hohe Förderleistung der Hydraulikpumpe verlangt wird, die natürlich genau auf diese Spitzenbelastung auszulegen ist. Auch alle andere Ressourcen, zum Beispiel Pneumatik oder auch elektrische Ausstattung, sind auf diese punktuelle Spitzenbelastung hin auszurichten, die aufgrund des festen zyklischen Arbeitsablaufs der Transferstraße vorgegeben ist.

Des Weiteren zeichnet sich eine Transferstraße dadurch aus, daß die Bearbeitungsstationen in einem festen Abstand zueinander vorgesehen sind, da der Transferbalken letztendlich von der ersten bis zur letzten Bearbeitungsstation durch die ganze Transferstraße verläuft. Der mimimalste Abstand zwischen den einzelnen Bearbeitungsstationen bemißt sich daher nach der größten einzelnen Bearbeitungsstation und man riskiert, daß oftmals Platz verschenkt wird. Ähnliches ist bei einer Zwischenstation zu beobachten, wenn zum Beispiel ein Werkstück zwischen zwei Bearbeitungsstationen für Vermessungszwecke vorzuhalten ist, so muß hierfür ein einzelner Rasterplatz, an dem normalerweise eine Bearbeitungsstation angeordnet ist, vorgesehen werden. Damit vergrößert sich unnötigerweise die gesamte Länge der Transferstraße, die solche Transferstraßen aufnehmenden Hallen sind entsprechend zu dimensionieren.

Aus dem Stand der Technik ist eine Transfervorrichtung für eine taktweise Bewegung und Positionierung von Werkstücken in einem Bearbeitungszentrum aus mehreren hintereinander angeordneten Bearbeitungsstationen bekannt. Die Lösung nach diesem Stand der Technik zeichnet sich, wie bereits der Titel sagt, durch einen taktweisen Transport der Werkstückträger zu den einzelnen Bearbeitungsstationen aus. Auch der Rücktransport der Schlitten erfolgt taktweise.

Des Weiteren ist eine Vorrichtung zur Entnahme und zur Zuführung von Formteilen bekannt. Diese Vorrichtung zeichnet sich durch eine horizontal ausgerichtete, im Einbauzustand endseitig an zwei benachbarten Pressen ortsfest befestigte Traverse aus, die einen auf ihr horizontal verfahrbaren Wagen mit einer vertikal verfahrbaren Hubsäule trägt, an deren freiem Ende über eine in ihre Längsrichtung von der Vertikalen abweichend ausgerichtete Schwenkachse ein Schwenkarm befestigt ist, der an seinem freien Ende die Werkstückaufnahme trägt.

Es ist weiterhin eine Lösung im Stand der Technik bekannt, die ein Werkzeugmaschinensystem betrifft, umfassend eine Mehrzahl von Bearbeitungsstationen, eine verfahrbare Be- und Entladevorrichtung und eine Fahrstrecke, auf der eine Be- und Entladevorrichtung verfahrbar ist. Die Be- und Entladevorrichtung zeichnet sich dadurch aus, dass ein Tragarm darauf angeordnet ist, der die bearbeiteten Werkstücke in die einzelnen Bearbeitungsstationen transportiert und nach der Bearbeitung wieder entnimmt.

Die Transferstraßen sind regelmäßig auf sehr große Stückzahlen ausgerichtet und die in den Transferstraßen eingesetzten Bearbeitungsstationen sind auf spezielle Bearbeitungsvorgänge spezialisiert und als Sonderwerkzeugmaschinen ausgebildet.

Ausgehend von dem vorgeschilderten Stand der Technik ist es Aufgabe dieser Erfindung, eine Bearbeitungslinie derart weiterzuentwickeln, daß deren Energieverbrauch geringer ist.

Zur Lösung dieser Aufgabe schlägt die Erfindung eine Bearbeitungslinie wie beschrieben vor, wobei bei dieser zwischen zwei benachbarten Bearbeitungsstationen je eine Transportvorrichtung vorgesehen ist, die sich dadurch auszeichnet, dass die Transportbewegung eines ersten Werkstückes zwischen einer ersten und zweiten Bearbeitungsstation unabhängig erfolgt von der Transportbewegung eines zweiten Werkstückes zwischen der zweiten und dritten Bearbeitungsstation.

Wie geschildert werden sämtliche energieverbrauchende Elemente, auf die aufgrund der getakteten Arbeitsweise auftretende Spitzenbelastung ausgelegt und sind daher während eines Taktzyklus nur in gewissen Abständen aktiv. Die übrige Zeit verharren diese Aggregate in einer entsprechenden Warteposition. Durch den erfindungsgemäßen Vorschlag, daß zwischen zwei benachbarten Bearbeitungsstationen je eine Transportvorrichtung vorgesehen ist, wird die feste, starre Kopplung bei dem Bearbeitungszyklus in der Transferstraße aufgebrochen. Diese Abkehr von einer wesentlichen Eigenschaft der Transferstraße führt überraschend dazu, daß sich die Belastung für die einzelnen, energiezehrenden Aggregate (wie Hydraulikpumpe) verstetigt und Leistungsspitzen abgebaut werden. Hieraus resultiert, daß wesentlich kleinere Hydraulik- und Pneumatikanlagen vorgesehen werden können und auch die Stromzuführung entsprechend kleiner dimensioniert werden kann. Neben einer Reduktion des Energieverbrauches werden natürlich auch die Kosten für die Erstellung einer erfindungsgemäßen Bearbeitungslinie reduziert, da die einzusetzenden Aggregate nicht mehr in der bekannten Größe zu dimensionieren sind.

Hierin erschöpft sich die Erfindung aber nicht. Durch das bewußte Weglassen einer alle Bearbeitungsstationen miteinander verbindenden Transferstange, wird auch das starre Rastermaß, an welchem eine Bearbeitungsstation vorzusehen ist, aufgelöst. Die einzelnen, die Bearbeitungsstationen verbindenden Transportvorrichtungen, können grundsätzlich unterschiedliche Transportlängen aufweisen, wodurch die Anordnung der Bearbeitungsstationen enger und damit platzsparender erfolgen kann, ohne dabei die Zugänglichkeit der einzelnen Bearbeitungsstationen, zum Beispiel für Wartungszwecke und so weiter, zu schmälern.

In der Regel ist die Bearbeitungszeit in den Bearbeitungsstationen unterschiedlich. So ergibt es sich, daß ein erstes Werkstück aus einer ersten Bearbeitungsstation früher ausgefördert werden kann, als ein zweites Werkstück aus einer zweiten Bearbeitungsstation. Da die beiden Transportvorrichtungen untereinander unabhängig sind beziehungsweise je eine Transportvorrichtung bei zwei benachbarten Bearbeitungsstationen vorgesehen ist, entkoppelt man den Be- beziehungsweise Entladevorgang der Bearbeitungsstationen voneinander. Ein gleichzeitiges Spannen der Werkstücke in den Bearbeitungsstationen ist dann nicht mehr der Regel- sondern der Sonderfall, das Hydraulikaggregat läuft dauerhafter mit kleineren Belastungsspitzen. Dies gilt natürlich für alle anderen Aggregate in gleicher Weise.

Aus dem Stand der Technik ist eine Transfervorrichtung bekannt, zu der auch eine Steuerungseinrichtung gehört, welche die Fahrbewegungen der Schlitten steuert und die Koppelelemente betätigt. Bei der Lösung nach dem Stand der Technik werden allerdings alle Schlitten gleichzeitig oder annähernd gleichzeitig mit jeweils einem angekoppelten Werkstückträger aus der Anfangs- in die Endposition bewegt. Die Werkstückträger werden dann von den in den Endpositionen verharrenden Schlitten abgekoppelt und im Eingriffsbereich der Bearbeitungsstation fixiert, sodass die Bearbeitungen ausgeführt werden können. Währenddessen werden die Schlitten aus den Endpositionen in die Anfangspositionen zurückbewegt und die Werkstückträger in den Anfangspositionen an die Schlitten angekoppelt. Die zuvor beschriebenen Bedienungsabläufe im Stand der Technik bilden jeweils einen Arbeitstakt, dessen Taktzeit sich aus einem Zeitanteil für die Fahrt des Werkstückträgers von einer Bearbeitungsstation zur nächsten und einer Werkstückhaltezeit für die Werkstückbearbeitung in der Bearbeitungsstation zusammensetzt. Daraus ist ersichtlich, dass die aus dem Stand der Technik bekannte Lösung nicht leisten kann, was mit der erfindungsgemäßen Bearbeitungslinie jetzt erreicht wird, nämlich die Transportbewegung eines ersten Werkstückes zwischen einer ersten und einer zweiten Bearbeitungsstation unabhängig von der Transportbewegung eines zweiten Werkstückes zwischen der zweiten und dritten Bearbeitungsstation durchführen zu lassen. Die Erfindung zeichnet sich gerade dadurch aus, dass die Bewegungsabläufe unabhängig voneinander erfolgen können, wodurch die vorher beschriebene Taktzeiten nicht erforderlich sind und es insgesamt gelingt, das Beschicken der Bearbeitungsstationen wesentlich früher als im Stand der Technik bekannt, zu realisieren. Dies gelingt insbesondere durch die unabhängig voneinander mögliche Positionierung und/oder Zustellung der Werkstücke zu den Bearbeitungsstationen.

Überraschenderweise gelingt es mit der erfindungsgemäßen Anordnung auch die im Stand der Technik vorhandenen Zwischenablagen für die Werkstücke einzusparen. Die Zwischenablagen sind zum Beispiel als Prüfplätze notwendig, um zum Beispiel zu kontrollieren, ob eine gewisse Bearbeitung, zum Beispiel eine Bohrung und so weiter, tatsächlich ausgeführt wurde. Dieser Prüfzyklus ist regelmäßig sehr viel kürzer als die eigentliche Bearbeitung, bedurfte aber im Stand der Technik einer eigenen Station und band damit zusätzliche Werkstücke in der Bearbeitungslinie.

Mit der jetzt vorgeschlagenen Erfindung wird als zusätzlicher Effekt erreicht, daß das Vorsehen einer platzintensiven Zwischenstation eingespart wird und sich gleichzeitig viel weniger Werkstücke in der Bearbeitungslinie befinden. Nach der Erfindung erhält man nämlich die Zwischenablage geschenkt, das bedeutet, daß das hier aus einer ersten Bearbeitungsstation herausgenommene Werkstück von der ersten Transportvorrichtung zur zweiten Bearbeitungsstation transportiert wird und dann vor der zweiten Bearbeitungsstation auf der Transportvorrichtung vorgehalten wird. In dieser Position ist es möglich, zum Beispiel entsprechende Prüfschritte durchzuführen, ohne hierfür zusätzlichen Platz und so weiter aufzuwenden.

Dabei befindet sich das zu bearbeitende Werkstück bereits direkt vor der zweiten Bearbeitungsstation und kann sofort, nachdem die zweite Bearbeitungsstation mit der davorliegenden Werkstückbearbeitung fertig ist, mit diesem zweiten Werkstück beladen werden. Im Vergleich zu der Transferstraße nach dem Stand der Technik befanden sich alle Werkstücke in der gleichen Relativlage zu den jeweiligen Bearbeitungsstationen, das bedeutet, nach Abschluß der Bearbeitung (für alle Bearbeitungsstationen) befindet sich das nachfolgende Werkstück noch am Ausgang der in Bearbeitungsrichtung davorliegenden Bearbeitungsstation. Das bedeutet, daß zuerst das Werkstück herantransportiert werden kann und erst dann dieses in die Bearbeitungsstation hereingefördert werden kann, was entsprechend mehr Zeit beim Bearbeiten benötigt.

Der erfindungsgemäße Vorschlag führt auch zu einer höheren Effizienz der erfindungsgemäßen Bearbeitungslinie.

Zusammengefaßt zeichnet sich der erfindungsgemäße Vorschlag dadurch aus, daß durch ihn eine räumlich flexibel aufzustellende Bearbeitungslinie resuliert, deren Platzverbrauch beliebig optimierbar ist, deren Energieverbrauch geringer ist und deren Effizienz beziehungsweise Leistungsfähigkeit höher ist als im Stand der Technik.

Des Weiteren ermöglicht die Erfindung, daß eine Prüfung ohne Taktzeitverlust möglich ist. In der Differenz zwischen der Bearbeitungszeit und der Transferzeit, also der Zeit zwischen dem Transport des Werkstückes von einer ersten zu einer zweiten Bearbeitungsstation, verbleibt gegebenenfalls ausreichend Zeit, um entsprechende Prüfungen durchzuführen.

In gleicher Weise ist es jetzt nach der Erfindung auch möglich, daß das Werkstück zwischen zwei Stationen, zum Beispiel um eine vertikale oder auch eine horizontale Achse gedreht werden kann, wobei auch dies ohne zusätzlichen Zeitverlust oder einer zusätzlichen separaten Station, die Platz benötigt, erfolgt.

Des Weiteren zeichnet sich die Erfindung dadurch aus, daß nunmehr eine beliebig lange Bearbeitungslinie beziehungsweise Transferstraße aufgebaut werden kann. Bei den herkömmlichen Transferstraßen ist zu beachten, daß sich die durch alle Bearbeitungsstationen durchlaufende Transferstange aufgrund Wärmeentwicklung entsprechend längen kann. Diese Maßdifferenzen beeinträchtigen natürlich die Transportwirkung und begrenzen letztendlich die Gesamtlänge einer möglichen herkömmlichen Bearbeitungslinie nach dem Stand der Technik.

Die Erfindung ist dabei bei jeder Art von Bearbeitungslinien, z.B. Transferstraßen oder Montagelinien, einsetzbar.

Des Weiteren ist es nunmehr mit der Erfindung möglich, daß in der Bearbeitungsstation auch ein Rundtisch für die Spannvorrichtung vorgesehen ist, da im Bearbeitungsraum der Bearbeitungsstation nun keine durchgehende Transferstange mehr vorhanden ist.

Erfindungsgemäß wird vorgeschlagen, daß zumindest eine Bearbeitungsstation als Sondermaschine ausgebildet ist. Dabei können mehrere, der Großteil oder alle Bearbeitungsstationen als Sondermaschinen ausgebildet sein, wobei im Sinne der Erfindung als Sondermaschine zum Beispiel eine Sonderwerkzeugmaschine oder auch eine Montagemaschine zu verstehen ist. Eine solche Sondermaschine grenzt sich gegenüber einem flexibel arbeitenden Bearbeitungszentrum dadurch ab, daß die Sondermaschine auf einen speziellen Anwendungsfall eingestellt ist und nicht flexibel für andere Bearbeitungen einsetzbar ist. Dadurch erreichen entsprechende Sondermaschinen schnelle Bearbeitungszeiten, da ein aufwendiges Werkzeugwechseln, wie es bei Bearbeitungszentren systembedingt vorgesehen ist, eingespart wird.

Nach der Erfindung ist es vorgesehen, daß die Transportbewegung eines ersten Werkstückes zwischen einer ersten und zweiten Bearbeitungsstation unabhängig erfolgt von der Transportbewegung eines zweiten Werkstückes zwischen der zweiten und dritten Bearbeitungsstation. Grundsätzlich gilt, daß die Transportbewegungen, also der Transfer eines Werkstückes zwischen den jeweiligen Bearbeitungsstationen, nach der Erfindung nunmehr entkoppelt erfolgt. Dies orientiert sich danach, daß die Bearbeitung in der jeweiligen Bearbeitungsstation abgeschlossen ist und die Transportvorrichtung zur Aufnahme des Werkstückes frei ist, also zum Beispiel nicht noch durch ein anderes Werkstück, welches in die nachfolgende Bearbeitungsstation noch nicht hat eingeliefert werden können, blockiert ist.

Dabei ist erfindungsgemäß entsprechend einer vorteilhaften Weiterbildung vorgesehen, daß die Transportvorrichtung das Werkstück aus der Bearbeitungsstation entnimmt und/oder in die Bearbeitungsstation beziehungsweise deren Spannvorrichtung einsetzt. Der Einsatz eines separaten Greifers, der das Werkstück aus der Bearbeitungsstation entnimmt und auf die Transportvorrichtung aufsetzt, wird dadurch vermieden, die Taktzeiten werden dadurch entsprechend erhöht.

In einer erfindungsgemäßen Variante wird dabei vorgesehen, daß eine kombinierte Linear- und Verschwenkbewegung des Werkstückes durch die Transportvorrichtung erfolgt. Das Überlagern der Verschwenkbewegung mit der Linearbewegung kann durch Einsatz einer intelligenten Steuerung dazu ausgenützt werden, zwei lineare, zueinander orthogonale Bewegungen zu bewirken. Alternativ ist es dabei vorgesehen, daß die Transportvorrichtung zum Beispiel auch einen Kreuztisch besitzt, durch welchen eine zweite orthogonale Achse resultiert. Jedoch erhöht sich durch die Kombination einer linearen und einer Verschwenkbewegung die Reichweite der Transportvorrichtung beziehungsweise verkürzt deren notwendige Länge. Die Transportvorrichtung dient dabei nicht nur für den alleinigen Transfer, sondern sorgt, wie auch bereits beschrieben, für das Ein- und Auswechseln des Werkstückes in die jeweiligen Bearbeitungsstationen.

Da kein starrer Transferbalken mehr für den Transport vorgesehen ist, durch den die entsprechende Rasterlänge vorgegeben ist, ergibt sich durch die Erfindung ein wahlfreier Abstand zwischen den Bearbeitungsstationen.

Eine vorteilhafte Weiterbildung der Erfindung ist dadurch gekennzeichnet, dass sich die Transportvorrichtungen über an den Bearbeitungsstationen vorgesehene Konsolen abstützen. Dadurch gelingt es, die Transportvorrichtungen sicher mit den Bearbeitungsstationen zu verbinden und gleichzeitig den Aufwand für die Aufstellung der Transportvorrichtung zu senken.

Des Weiteren umfaßt die Erfindung auch eine Transportvorrichtung für eine Bearbeitungslinie wie beschrieben. Aus dem Stand der Technik sind für solche Bearbeitungslinien zum Beispiel Transferstangen beziehungsweise Transferbalken als Transportvorrichtungen bekannt. Wie beschrieben führen diese zu der starken Kopplung der einzelnen Arbeitsschritte und den daraus resultierenden Problemen. Des Weiteren sind für Bearbeitungslinien der Einsatz von Friktionsrollenbahnen bekannt, bei welchen das Gut, das Werkstück oder auf Paletten aufgespannte Werkstücke auf antreibbaren Rollenbahnen transportiert wird. Nachteilig bei diesen Anordnungen ist, daß für das Einsetzen des Werkstückes in die Bearbeitungsstation eine separate Vorrichtung verwendet werden muß. Um diesen Stand der Technik zu verbessern schlägt die Erfindung vor, daß die Transportvorrichtung wie vorher beschrieben mindestens einen, auf einer Führungsschiene positionierbaren Schlitten und einen anheb- beziehungsweise absenkbaren, insbesondere verschwenkbaren Tragarm aufweist und der Tragarm entweder direkt oder indirekt das Werkstück hält, die sich dadurch auszeichnet, daß ein Drehgelenk unterhalb einer Führungsschiene vorgesehen ist und eine Sockelplatte den ersten Teil des Drehgelenks aufnimmt, wobei auf der dem Schlitten abgewandten Seite der Führungsschiene der andere Teil des Drehgelenks vorgesehen ist.

Die Erfindung ist allerdings nicht nur auf eine Transportvorrichtung für eine Bearbeitungslinie, wie vorher beschrieben, ausgerichtet, sondern umfasst auch eine Transportvorrichtung für eine Bearbeitungslinie, wobei die Transportvorrichtung mindestens einen auf einer Führungsschiene positionierbaren Schlitten und einen anheb- beziehungsweise absenkbaren, insbesondere verschwenkbaren Tragarm aufweist und der Tragarm das Werkstück hält, die sich dadurch auszeichnet, dass ein Drehgelenk vorgesehen ist, welches unterhalb einer Führungsschiene vorgesehen ist und eine Sockelplatte eines Sockels einen ersten Teil des Drehgelenks aufnimmt und auf der dem Schlitten abgewandten Seite der andere Teil des Drehgelenks angeordnet ist. Diese Lösung lässt sich auch an anderen Bearbeitungslinien problemlos einsetzen. Die vorher beschriebenen Vorteile der erfindungsgemäßen Lösung treten in gleicher Weise ein.

Oftmals ist das Werkstück in eine Spannvorrichtung einzusetzen oder von dieser abzuheben. Neben der oftmals horizontal erfolgenden Transferbewegung des Werkstückes ist also eine zur Transferbewegung rechtwinklige Bewegung notwendig. Der Einsatz eines schwenkbaren Tragarmes hat den Vorteil, daß die Verschwenkbewegung auch einen gewissen Anteil in Richtung der Linearbewegung beinhaltet und somit die Reichweite der gesamten Transportvorrichtung entsprechend vergrößert werden kann.

Durch eine geschickt ausgebildete Steuerung erreicht man dabei trotzdem eine exakt vertikale Bewegung, bei welcher der Tragarm verschwenkt wird und der oder die Schlitten auf der Führungsschiene entsprechend gegenpositioniert wird. Eine solche Bewegung ist beim genauen Ein- beziehungsweise Aussetzen des Werkstückes in der Bearbeitungsstation hilfreich.

Geschickterweise wird dabei das Anheben oder Absenken durch eine Schwenkbewegung um eine horizontale Achse realisiert.

Der erfindungsgemäß vorgeschlagene Tragarm, der das Werkstück hält, kann dieses direkt oder indirekt halten. Erfindungsgemäß wird dabei auch vorgeschlagen, daß der Tragarm einen Aufnahmetisch für das Werkstück besitzt und der Tragarm für ein Parallelogrammführung realisiert ist. Die beiden parallel verlaufenden Tragarmstäbe enden dabei beiderseits an dem Aufnahmetisch und andererseits an dem die Schlitten tragenden Sockel. Durch den Einsatz der Parallelogrammführung wird erreicht, daß der Aufnahmetisch unabhängig von der Verschwenkstellung des Tragarmes gleich orientiert bleibt und bevorzugt horizontal ausgerichtet ist.

Die Erfindung zeichnet sich auch dadurch aus, dass die Tragarmstäbe in Sockelgelenken im Sockel gelenkig gelagert sind. Es ist weiterhin alternativ vorgesehen, zwei Tischgelenke auszubilden, durch die die Tragarmstäbe mit dem Aufnahmetisch gelenkig verbunden sind.

Von Vorteil ist es weiterhin, wenn der Abstand der Sockelgelenke dem Abstand der Tischgelenke entspricht.

Von Vorteil ist es auch, wenn ein Verschwenkantrieb vorgesehen ist, über den der Tragarm entlang einer Schwenklinie gesteuert verschwenkbar und positionierbar ist.

Die Erfindung schlägt in einer weiteren Variante vor, dass wenigstens eine Positionierhilfe am Aufnahmetisch vorgesehen ist, die mit den Werkstücken für einen sicheren Halt des Werkstückes, insbesondere während des Transfers zusammenwirkt.

Dabei zeichnet sich die erfindungsgemäße Tragvorrichtung durch eine stehende wie auch eine hängende Anordnung aus.

Alternativ wird weiterhin gemäß der Erfindung vorgeschlagen, daß die Tragvorrichtung um eine vertikale Achse drehbar ist. Durch eine solche Ausgestaltung erreicht man, daß zum Beispiel ein Werkstück auch ausschleusbar ist, oder aber der Bearbeitungsweg mit einer Weiche ausstattbar ist. Dabei wird vorgeschlagen, daß der Sockel bezüglich der Schlitten gedreht wird. In einer anderen Variante wird die gesamte Transportvorrichtung verdreht.

Die Erfindung zeichnet sich in einer Variante dadurch aus, dass zwischen dem Sockel und dem Schlitten ein Drehgelenk vorgesehen ist, mittels dessen der Sockel mit dem daran angeordneten Tragarm um eine vertikal orientierte Drehachse drehbar ist.

Eine weitere Ausgestaltung sieht dabei vor, dass die Schlitten durch eine Verbindungsplatte miteinander verbunden sind.

Die Erfindung schlägt weiterhin vor, dass die Verbindungsplatte einen Teil des Drehgelenks trägt und der andere Teil des Drehgelenks auf der Unterseite des Sockels angeordnet ist.

Von Vorteil ist es weiterhin, wenn die Tragarmstäbe abgekröpft sind beziehungsweise Aussparungen aufweisen.

Die Transportvorrichtung ist erfindungsgemäß zwischen der Bearbeitungsstation vorgesehen. Um die Montage der Transportvorrichtungen zu erleichtern und insbesondere einen separaten Gestellfuß für die Transportvorrichtungen einzusparen ist vorgesehen, daß die Bearbeitungsstationen entsprechende Konsolen aufweisen, an welchen die Transportvorrichtungen aufgelegt werden.

In der Zeichnung ist die Erfindung schematisch dargestellt. Es zeigen:
- Fig. 1a bis 1k: in zehn Figuren jeweils eine schematische Seitenansicht der Bearbeitungslinie in verschiedenen Bearbeitungsstellungen gemäß der Erfindung und
- Fig. 2 bis 5: jeweils in einer Seitenansicht verschiedene Varianten der erfindungsgemäßen Transportvorrichtung.

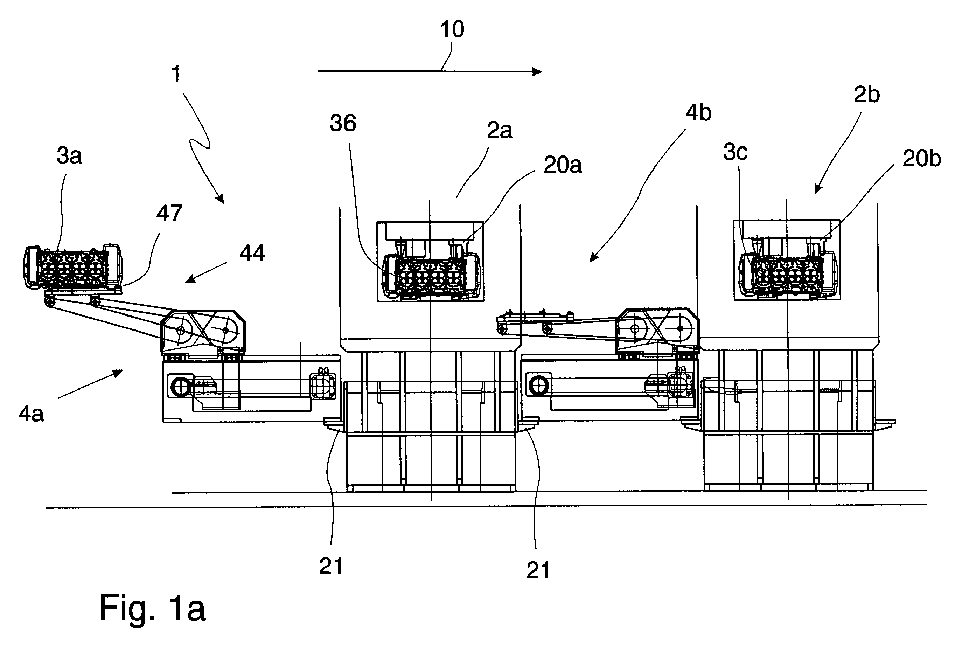

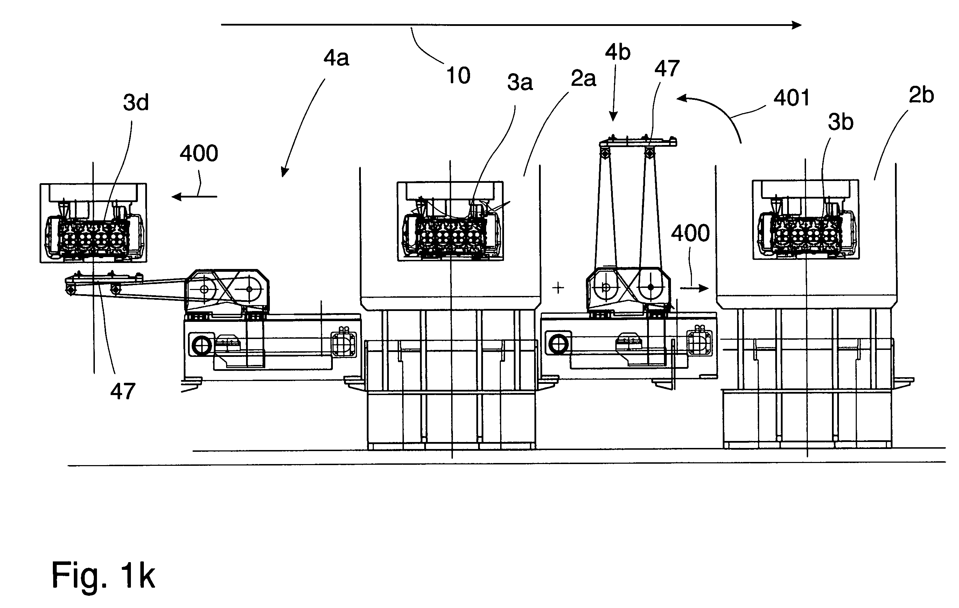

In Fig. 1a ist der schematische Aufbau einer erfindungsgemäßen Bearbeitungslinie 1 gezeigt. Die Bearbeitungslinie 1 besteht dabei aus einer Mehrzahl in Bewegungsrichtung 10 der Werkstücke 3a, 3b, 3c angeordneter Bearbeitungsstationen 2a, 2b. Zwischen den einzelnen Bearbeitungsstationen 2a, 2b und so weiter sind jeweils unabhängig voneinander angetriebene und arbeitende Transportvorrichtungen 4a, 4b vorgesehen. Die Transportvorrichtungen 4a, 4b stützen sich an Konsolen 21 an den Bearbeitungsstationen 2a, 2b ab.

Die Bewegungsrichtung 10 ist auf dem Blatt von links nach rechts verlaufend. Es ergibt sich daher, daß das mit der ersten Transportvorrichtung 4a herantransportierte Werkstück 3a als nächstes in die Bearbeitungsstation 2a einzusetzen ist. Dies kann natürlich erst dann erfolgen, wenn das hierin befindliche Werkstück 3b aus dieser ersten Bearbeitungsstation 2a mit Hilfe der zweiten Transportvorrichtung 4b heraustransportiert worden ist. Dies ist auch erst möglich, wenn das Werkstück 3b die zweite Bearbeitungsstation 2b nach Abschluß der Bearbeitung verlassen hat. Die Transportvorrichtungen 4a, 4b weisen nach dem hier gezeigten Ausführungsbeispiel keinen separaten Sockel oder Fuß auf, sondern stützen sich über an den Bearbeitungsstationen 2a, 2b vorgesehene Konsolen 21 ab. Für das Spannen der Werkstücke 3 sind in den Bearbeitungsstationen entsprechende Spannvorrichtungen 20a, 20b vorgesehen. Für einen möglichst stabilen, sicheren Transport beziehungsweise Transfer der Werkstücke 3a, 3b, 3c besitzt die Transportvorrichtung 4a, 4b einen von einem Tragarm 44 gehaltenen Aufnahmetisch 47.

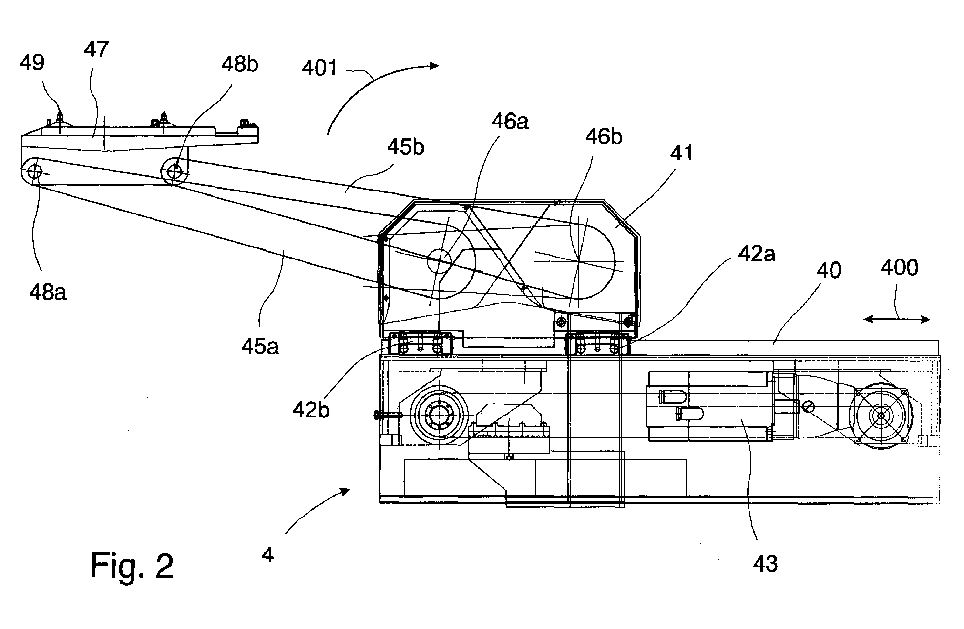

Die genaue Ausgestaltung der Transportvorrichtung 4, 4a und 4b ergibt sich insbesondere aus der Darstellung nach Fig. 2.

Auf einer Führungsschiene 40 ist über zwei Schlitten 42a, 42b ein Sockel 41 entlang des Doppelpfeils in Richtung 400 linear bewegbar. Für den Antrieb des Sockels 41 dient ein Antrieb 43, der unterhalb der Führungsschiene 40 vorgesehen ist. Das Antriebskonzept kann hier beliebig gestaltet sein, es kann eine Kugelrollspindel oder ein Riemen-, Band- beziehungsweise Kettenantrieb gewählt werden. Der Antrieb ist steuerbar und exakt positionierbar.

Der Sockel 41 trägt den Tragarm 44. Der Tragarm wiederum hält das Werkstück 3.

In dem hier gezeigten Ausführungsbeispiel ist der Tragarm 44 aus zwei parallel zueinander angeordneten Tragarmstäben 45a, 45b gebildet. Alternativ ist es natürlich möglich, daß eine entsprechende Kreuzschlittenführung am Sockel 41 angeordnet ist, und so der Tragarm in seiner Höhe verstellbar ist.

Die hier vorgestellte Transportvorrichtung verfolgt aber ein anderes Konzept. Die beiden Tragarmstäbe 45a, 45b sind Teil einer Parallelogrammführung des Aufnahmetisches 47. Hierzu sind die beiden Tragarmstäbe 45a, 45b im Sockel 41 in Sockelgelenken 46a, 46b gelenkig gelagert. Der Abstand der Sockelgelenke 46a, 46b entspricht dem Abstand der beiden Tischgelenke 48a, 48b, durch welche die Tragarmstäbe 45a, 45b mit dem Aufnahmetisch 47 gelenkig verbunden sind.

Ein nicht weiter dargestellter Verschwenkantrieb läßt nun den Tragarm 44 entlang der Schwenklinie 401 gesteuert verschwenken und exakt positionieren, wobei durch diese Parallelogrammführung die Ausrichtung des Aufnahmetisches 47 unabhängig von dem Verschwenkwinkel immer gleich ausgerichtet ist.

Der Aufnahmetisch 47 trägt Positionierhilfen 49, die mit den Werkstücken in geeigneter Weise zusammenwirken und einen sicheren Halt des Werkstückes 3 während des Transfers ermöglichen.

In den Fig. 1a bis 1k ist der gesamte Durchwechselprozeß der beiden dargestellten Bearbeitungsstationen 2a, 2b gezeigt. Die Situation in Fig. 1a ist derart, daß die beiden Bearbeitungsstationen 2a, 2b sich in Bearbeitung befinden, die zweite Transportvorrichtung 4b in einer Abholwarteposition gleich hinter (bezogen auf die Bewegungsrichtung 10) der ersten Bearbeitungsstation 2a wartet und die erste Transportvorrichtung 4a ein Werkstück 3a bereits aufgenommen hat, um dieses an die erste Bearbeitungsstation 2a heranzutransportieren.

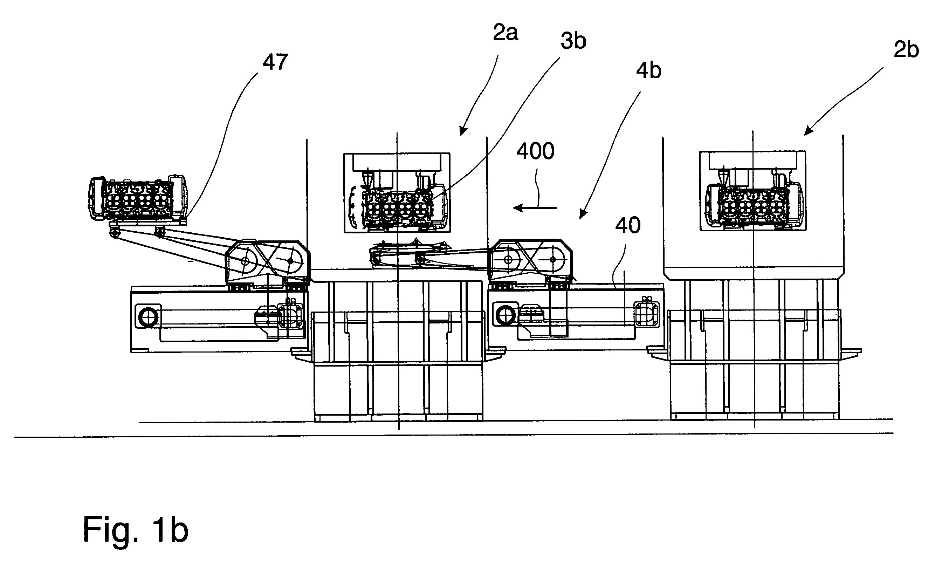

In Fig. 1b ist die Bearbeitung in der ersten Bearbeitungsstation 2a abgeschlossen oder fast abgeschlossen. Die zweite Transportvorrichtung 4b ist daher auf ihrer Führungsschiene 40 entlang des Pfeiles 400 nach links verschoben worden (im Verhältnis zur Fig. 1a), um ihren Aufnahmetisch 47 unter dem Werkstück 3b zu positionieren.

Die Bearbeitung in der Bearbeitungsstation 2b ist noch nicht abgeschlossen.

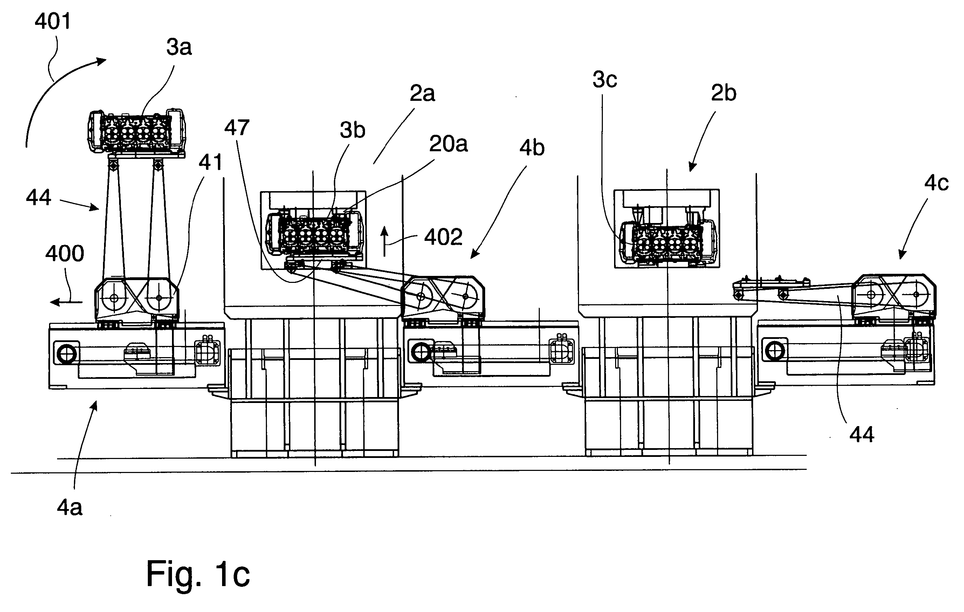

In der in Fig. 1c gezeigten Stellung befindet sich nunmehr auch die zweite Bearbeitungsstation 2b vor dem Abschluß ihrer Bearbeitung. Der Tragarm 44 einer dritten Transportvorrichtung 4c wird soeben in Bewegungsrichtung 10 hinter der zweiten Bearbeitungsstation 2b positioniert, um das fertig bearbeitete Werkstück 3c zu übernehmen.

In der ersten Bearbeitungsstation 2a ist in der Zwischenzeit der Aufnahmetisch 47 unter das Werkstück 3b positioniert, derart, daß die Spannvorrichtung 20a entlastet werden kann, um somit das Werkstück 3b auf den Aufnahmetisch 47 der zweiten Transportvorrichtung 4b zu übergeben.

Da es sich abzeichnet, daß die erste Bearbeitungsstation 2a sogleich entleert wird, wird bereits das Werkstück 3a mit Hilfe der ersten Transportvorrichtung 4a in Position gebracht. Hierzu wird der Tragarm 44 in Uhrzeigerrichtung 401 verschwenkt und gleichzeitig der Sockel 41 der ersten Transportvorrichtung 4a nach links (Pfeil 400) versetzt.

Die vertikale Bewegung 402 des Aufnahmetisches 47 der zweiten Transportvorrichtung 4b wird dabei durch eine geschickte Überlagerung der Verschwenkbewegung 401 und der Linearbewegung 400 erreicht. Dabei wird gerade der horizontale Bewegungsanteil der Schwenkbewegung 401 durch eine entgegengesetzte (horizontale) Linearbewegung 400 kompensiert, so daß die Vertikalbewegung 402 resultiert. Hierzu wird der Verschwenkwinkel gemessen und mit der bekannten trigonometrischen Funktion der Versatz in horizontaler Richtung kompensiert.

Da die zweite Transportvorrichtung 4b zunächst (vergleiche Fig. 1a, 1b) unbeladen war, kann diese Transportvorrichtung 4b jetzt eingesetzt werden, um das Werkstück 3b auf der ersten Bearbeitungsstation 2a zu entnehmen, wobei es dabei egal ist, ob die zweite Bearbeitungsstation 2b bereits die Bearbeitung des Werkstückes 3c abgeschlossen hat oder nicht. In jedem Fall wird zumindest kurzzeitig das Werkstück 3b in der zweiten Transportvorrichtung 4b gepuffert (z.B. für Prüf- oder Wendeschritte), bis dieses nämlich in die dann leere zweite Bearbeitungsstation 2b eingelegt werde kann. In die dadurch frei gewordene erste Bearbeitungsstation 2a kann dann das auf der ersten Transportvorrichtung 4a vorgehaltene Werkstück 3a eingelegt und durch die Spannvorrichtung 20a gespannt werden.

In Fig. 1c ist gut zu erkennen, daß die Bearbeitungszyklen in der erfindungsgemäßen Bearbeitungslinie in den verschiedenen Bearbeitungsstationen 2a, 2b unterschiedlich sind. Die Bearbeitungsstation 2a befindet sich in einer Werkstückwechselposition, die Bearbeitungsstation 2b befindet sich noch im Bearbeitungsmodus.

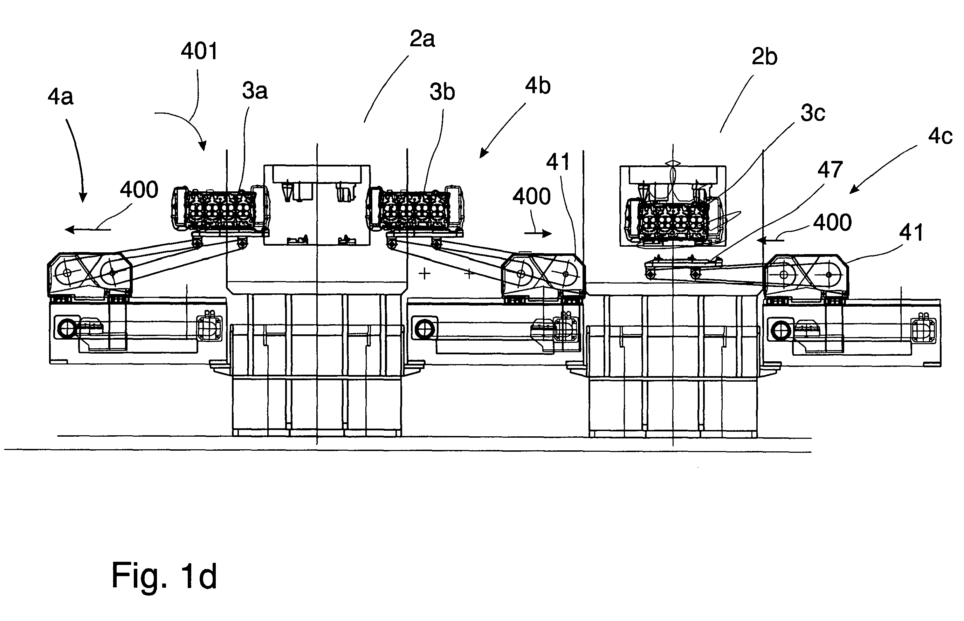

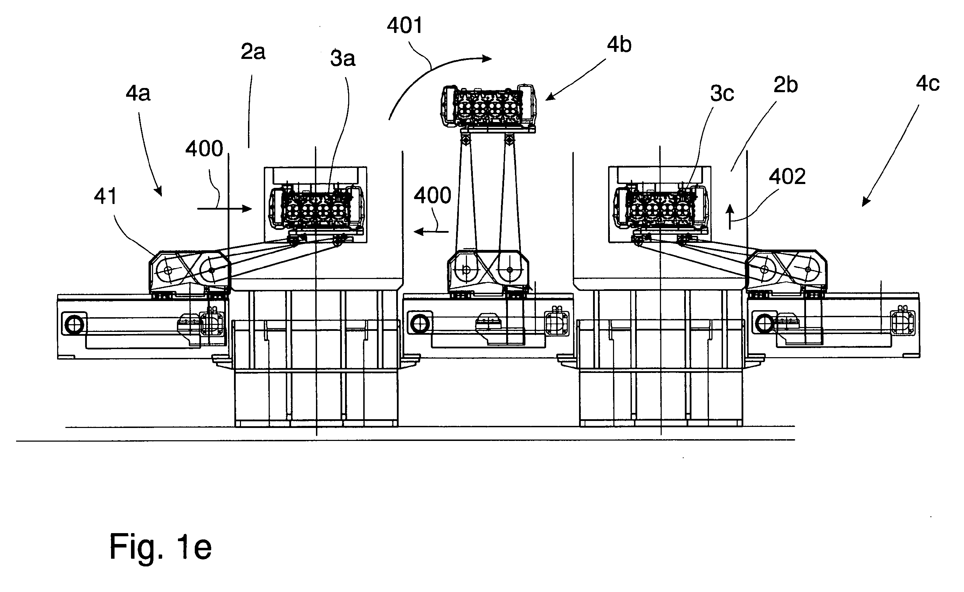

In Fig. 1d ist gezeigt, daß die erste Bearbeitungsstation 2a für das Ein- und Auswechseln der Werkstücke 3a, 3b in Wechselposition ist und in der zweiten Bearbeitungsstation 2b das Auswechseln des Werkstückes 3c unmittelbar bevorsteht, da der Sockel 41 der dritten Transportvorrichtung 4c nach links (Pfeil 400) versetzt worden ist, um den Aufnahmetisch 47 unter dem Werkstück 3c zu positionieren. Derweil wurde das Werkstück 3b durch die Transportvorrichtung 4b aus der Bearbeitungsstation 2a herausgeholt. Hierzu wurde der Sockel 41 der zweiten Transportvorrichtung 4b nach rechts (Pfeil 400) verschoben.

Das in der ersten Transportvorrichtung 4a noch befindliche Werkstück 3a wird als nächstes in die erste Bearbeitungsstation 2a eingewechselt. Hierzu wird die in Fig. 1c bereits begonnene Verschwenkbewegung in Uhrzeigerrichtung fortgeführt, mit einer gegenläufigen Linearbewegung 400 (nach links). Dadurch wird der Aufnahmetisch 47 mit dem darauf befindlichen Werkstück 3a abgesenkt bis auf das Niveau, auf welchem das Werkstück 3a passend in die Bearbeitungsstation 2a zum Aufspannen auf die Spannvorrichtung 20a hereinbewegt werden kann.

Auch in Fig. 1e stehen beide Bearbeitungsstationen 2a, 2b. In der rechten Bearbeitungsstation 2b wird das fertig bearbeitete Werkstück 3c gerade auf den Aufnahmetisch 47 der dritten Transportvorrichtung 4c übergeben, hierzu führt der Aufnahmetisch 47 gerade eine Vertikalbewegung 402 aus.

An dieser Stelle wird bemerkt, daß das Zustandekommen der Vertikalbewegung 402, überall wo diese eingesetzt wird, in gleicher Weise durchgeführt wird, wie diese zum Beispiel für Fig. 1c beschrieben wurde.

Das gerade eben aus der ersten Bearbeitungsstation entnommene Werkstück 3b befindet sich nunmehr zwischen den beiden Bearbeitungsstationen 2a, 2b in der zweiten Transportvorrichtung 4b.

Durch eine Umsetzbewegung in Uhrzeigerrichtung und einer dazu gegenläufigen Linearbewegung 400 nach links, wird das Werkstück 3b in den Bereich der zweiten Bearbeitungsmaschine 2b gebracht.

Die erste Transportvorrichtung 4a setzt gerade das Werkstück 3a in die erste Bearbeitungsstation 2a ein. Hierzu wird der Sockel 41 auf der Führungsschiene 40 nach rechts (Pfeil 400) verschoben. Eine zusätzliche Drehbewegung ist nicht mehr notwendig, diese wurde bereits in der Sequenz nach Fig. 1d abgeschlossen.

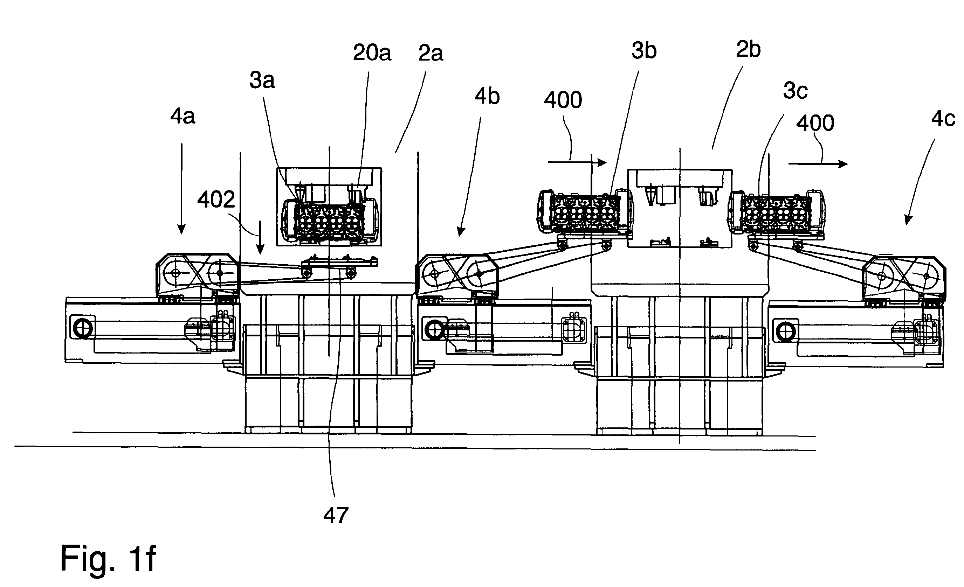

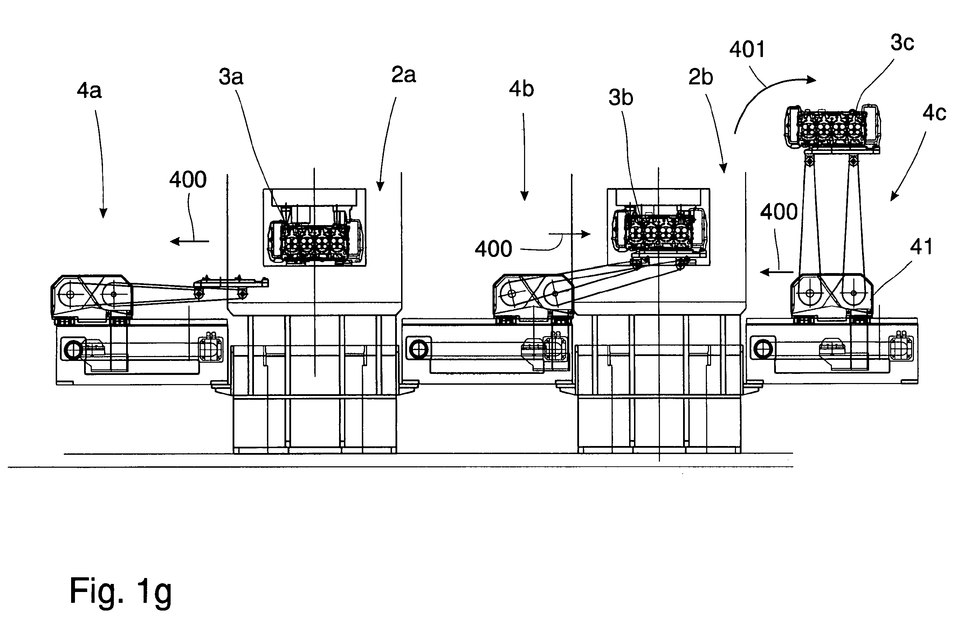

In Fig. 1f kann die Bearbeitungsstation 2a soeben mit der Bearbeitung des Werkstückes 3a beginnen. Die Bearbeitungsstation 2b ist noch in Wechselposition. Das Werkstück 3a wurde von der Spannvorrichtung 20a von der ersten Bearbeitungsstation 2a übernommen und in Position gespannt. Dadurch ist es möglich, daß der Aufnahmetisch 47 nach unten (Pfeil 402) abgesenkt wird. Auch diese Bewegung wird, wie in Fig. 1c beschrieben, durch geschickte Überlagerung der Verschwenk- und Linearbewegung erreicht.

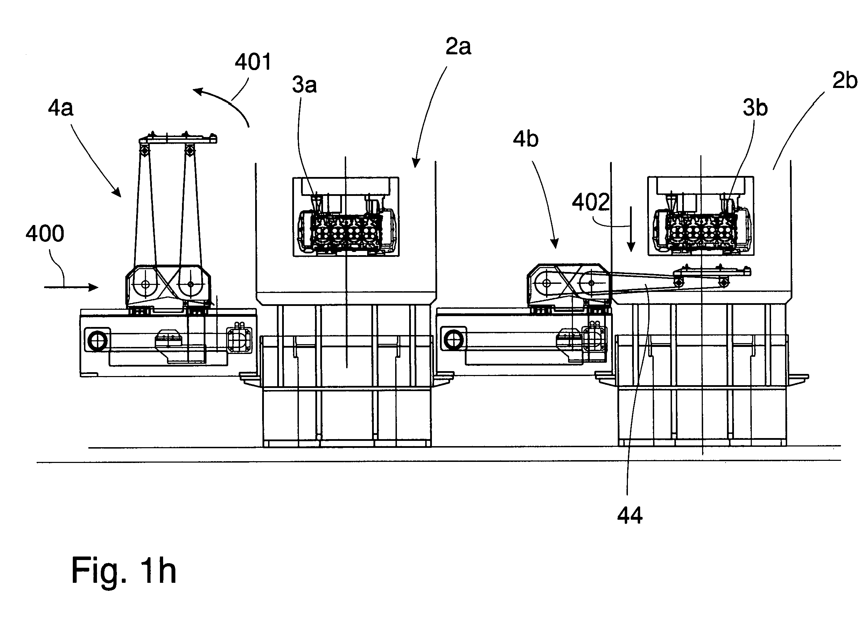

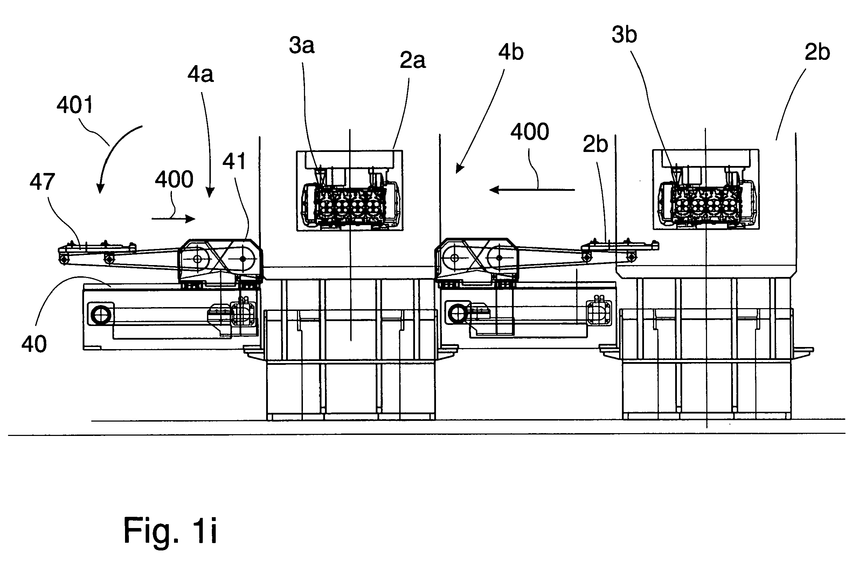

In der Bearbeitungsstation 2b ergibt sich nun die Situation wie bei Fig. 1 für die erste Bearbeitungsstation 2a. Das soeben fertig bearbeitete Werkstück 3c wird durch die Transportvorrichtung 4c entlang des Pfeiles 400 austransportiert, das in Warteposition vor der zweiten Bearbeitungsstation 2b vorgehaltene Werkstück 3b wird durch eine Linearbewegung nach rechts (Pfeil 400) in die Bearbeitungsstation 2b eingefördert.

In Fig. 1g befindet sich die Bearbeitungsstation 2b gerade kurz vor der Wiederaufnahme der Bearbeitung, wohingegen die Bearbeitung in der Bearbeitungsstation 2a bereits eine gewisse Zeit läuft. Dabei ist zu beachten, daß die Bearbeitung in der Bearbeitungsstation 2a bereits dann gestartet werden kann, wenn der Aufnahmetisch 47 der ersten Transportvorrichtung 4a noch nicht vollständig zurückgezogen ist. Es muß nur darauf geachtet werden, daß keine Kollisionen auftreten.

Das Werkstück 3c wird in der Transportvorrichtung 4c gerade zur nächsten, nicht mehr dargestellten Bearbeitungsstation transferiert. Dies erfolgt durch eine Überlagerung der Verschwenkbewegung 401 (in Uhrzeigerrichtung) und der Rückzugbewegung des Sockels 41 nach links (Pfeil 400).

In der Zwischenzeit hat auch die zweite Transportvorrichtung 4b das Werkstück 3b in die Bearbeitungsstatione 2b eingesetzt.

Dies erfolgte durch eine Linearbewegung 400 nach rechts.

In Fig. 1h läuft die Bearbeitung in der ersten Bearbeitungsstation 2a am Werkstück 3a. In der zweiten Bearbeitungsstation 2b beginnt die Bearbeitung an dem Werkstück 3b. Der Tragarm 44 der zweiten Transportvorrichtung 4b ist noch nicht ganz zurückgezogen, er wird aber soeben nach unten vertikal abgesenkt (Pfeil 402). Die im Moment leere erste Transportvorrichtung 4a schwenkt gerade entgegen der Uhrzeigerrichtung nach links, um in die Position nach der davor angeordneten Bearbeitungsstation (nicht gezeigt) zu gelangen. Auch hier ist wieder eine entgegengerichtete Linearbewegung 400 nach rechts vorgesehen.

In Fig. 1i läuft an beiden Werkstücken 3a, 3b die Bearbeitung in den Bearbeitungsstationen 2a, 2b. Die zweite Transportvorrichtung 4b ist nach links linear zurückgesetzt, der Tragtisch 47 der zweiten Transportvorrichtung 4b befindet sich aber noch im Bereich der zweiten Bearbeitungsmaschine 2b. Hierzu ist die Situation in der ersten Transportvorrichtung 4a bereits weitergeschritten. Der Aufnahmetisch 47 der ersten Transportvorrichtung 4a ist bereits nach links (entgegen dem Uhrzeigersinn 401) verschwenkt, der Sockel 41 auf der Führungsschiene 40 ganz nach rechts (400) verschoben.

Wie beschrieben, bringen sich die Transportvorrichtungen 4a, 4b während der Bearbeitung in den Bearbeitungsstationen 2a, 2b wieder in Position, um die fertig bearbeiteten Werkstücke aus den davor angeordneten Bearbeitungsstationen übernehmen zu können. Hierzu ist die erste Transportvorrichtung 4a in Fig. 1k nach links linear verschoben, um den Aufnahmetisch 47 unter das Werkstück 3d einer vorgeordneten Bearbeitungsmaschine, die im weiteren noch angedeutet ist, zu bringen.

Der Aufnahmetisch 47 der zweiten Transportvorrichtung 4b befindet sich gerade in der Zurückschwenkbewegung, diese Zurückschwenkbewegung wird dabei immer mit einer gegensinnig verlaufenden Linearbewegung 400 kombiniert, um nicht in Kollision mit der Bearbeitungsstation zu gelangen. Darüberhinaus ist diese Anordnung günstig, da zwischen den Bearbeitungsstationen insbesondere Raum nach oben existiert, der durch die Verschwenkbewegung 401 ausgenützt werden kann.

Das Verfahren läuft dann weiter mit Fig. 1a, mit der Prämisse, daß das in Fig. 1k gezeigte Werkstück 3d dem Werkstück 3a in Fig. 1a entspricht. Alle Werkstücke sind inzwischen um eine Bearbeitungsstation weiter nach rechts in Richtung der Bewegungsrichtung 10 gewandert und bearbeitet worden.

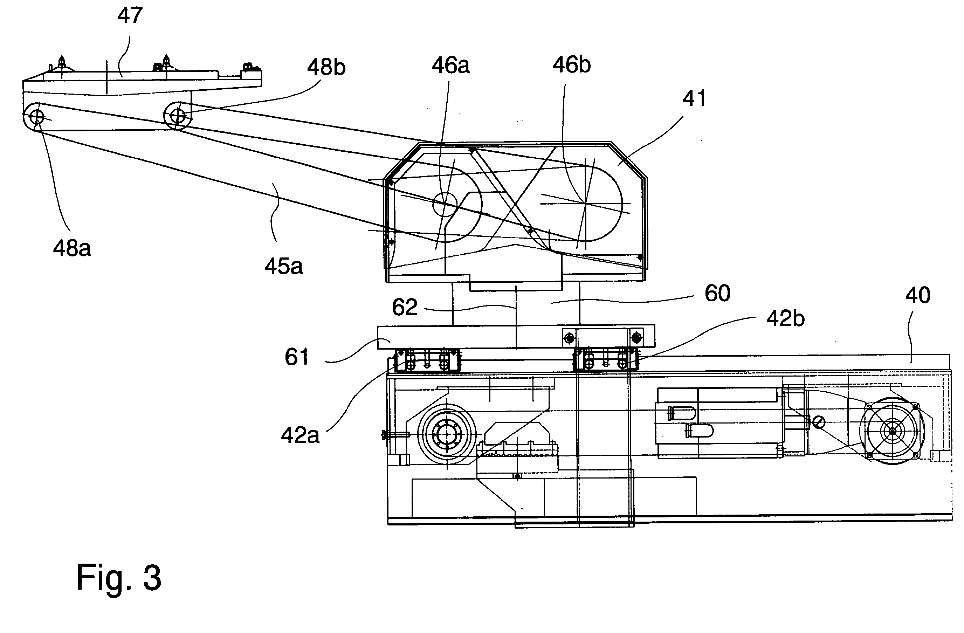

In Fig. 3 ist eine Variante der Ausgestaltung nach Fig. 2 gezeigt. In dem hier gezeigten Ausführungsbeispiel ist der Sockel 41 nicht direkt mit den Schlitten 42a, 42b verbunden, sondern zwischen dem Sockel 41 und den Schlitten 42a, 42b befindet sich ein Drehgelenk 60. Dadurch ist es möglich, den Sockel 41 und den daran angeschlossenen Tragarm 44 um eine vertikal orientierte Drehachse 62 zu drehen. Die beiden Schlitten 42a, 42b sind dabei durch eine Verbindungsplatte 61 miteinander verbunden und tragen auf der Oberseite einen Teil des Drehgelenkes 60, der andere Teil des Drehgelenkes 60 befindet auf der Unterseite des Sockels 41.

Wie bereits beschrieben, besteht der Tragarm 44 aus zwei parallel angeordneten Tragarmstäben 45a, 45b. Die Anordnung ist dabei so gewählt, daß die Lage der Tischgelenke 48a, 48b (definiert durch deren Drehachsen) auf das Niveau der Sockelgelenke 46a, 46b (definiert durch deren Drehachsen) absenkbar ist oder sogar noch darunter. Dies wird erreicht durch eine spezielle Ausgestaltung der Tragarmstäbe 45a, 45b, die in geeigneter Weise Abkröpfungen beziehungsweise Aussparungen aufweisen. Hierdurch wird die Beweglichkeit und Flexibilität der erfindungsgemäßen Transportvorrichtung entsprechend erhöht.

Bei der Variante nach Fig. 3 ist es zwar möglich, den Tragarm 44 um eine vertikale Achse 62 zu drehen, jedoch ist es nicht möglich, eine Rückzugsbewegung auszuführen. Für die Rückzugsbewegung wird auch eine lineare Bewegung, und zwar parallel zur Längserstreckung des Tragarmes 44, benötigt. Diese Parallelität ist bei einem Verschwenken um das Drehgelenk 60 nicht mehr gegeben, weswegen eine Rückzugsbewegung in der hier gezeigten Variante nicht möglich ist.

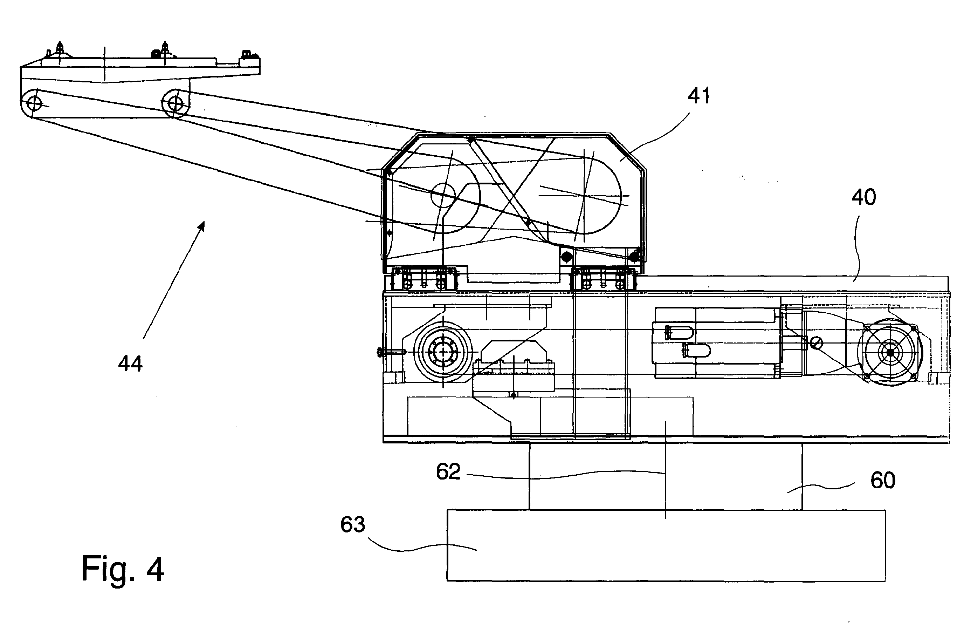

Dieser Nachteil wird aber durch den Vorschlag nach Fig. 4 ausgeräumt, bei welchem das Drehgelenk 60 unterhalb der Führungsschiene 40 vorgesehen ist. Es ist eine Sockelplatte 63 vorgesehen, die auf ihrer Oberseite das erste Teil des Drehgelenkes 60 aufnimmt. Die Führungsschiene 40 weist natürlich eine gewisse Dicke auf, da in ihr ja auch der Antrieb für den Sockel 41 vorgesehen ist. Auf der unteren (der Schlitten 42a, 42b abgewandten) Seite der Führungsschiene 40 ist der andere Teil des Drehgelenkes 60 vorgesehen. Auch diese Variante erlaubt ein Drehen um eine vertikale Drehachse 62, allerdings mit dem Vorteil, daß dann auch bei einer verdrehten Bewegung eine Absetzbewegung oder Rückzugsbewegung möglich ist, da die Parallelität der Führungsschiene 40 und der Längserstreckung des Tragarmes 44 durch eine Verschwenkbewegung nicht beeinträchtigt oder gebrochen wird. Mit Hilfe des Vorschlages nach Fig. 3 oder insbesondere nach Fig. 4 ist es möglich, Werkstücke aus der Bearbeitungslinie auszuschleusen beziehungsweise entsprechende Weichen und dergleichen zu realisieren.

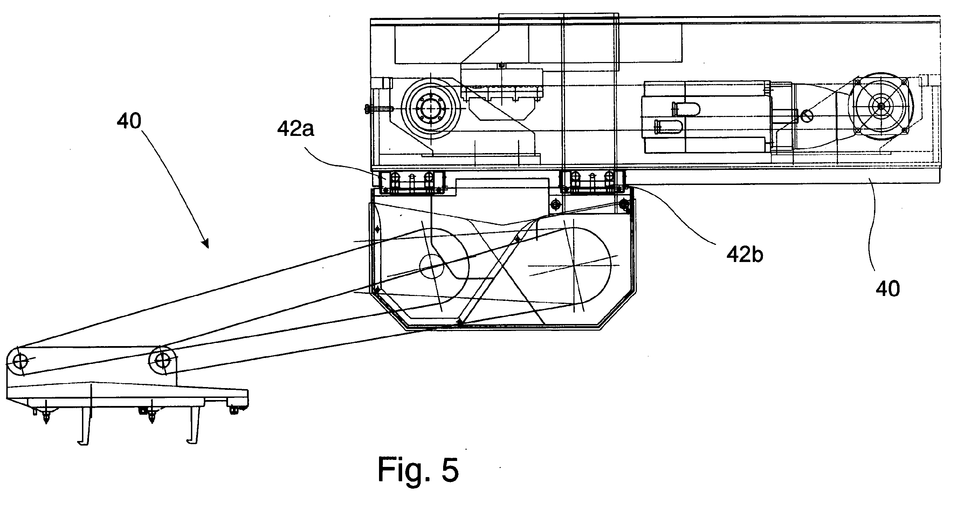

Die Lösung nach Fig. 2, 3 und 4 zeigen einen stehenden Aufbau. Das bedeutet, daß die Schlitten 42a, 42b auf der Führungsschiene 40 gleiten. Hingegen zeigt Fig. 5 eine hängende Anordnung, bei welcher sich die Führungsschiene 40 oberhalb der Schlitten 42a, 42b im Einsatzfalle befinden. Auch in diesem Ausführungsbeispiel sind natürlich die Kombinationen mit den Drehgelenken einsetzbar, auch wenn sie nicht gezeigt sind.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungslinie, insbesondere Transferstraße oder Montagelinie, bestehend aus einer Vielzahl von Bearbeitungsstationen, die in der Bearbeitungsrichtung hintereinander angeordnet sind und die Bearbeitungsstation für die Bearbeitung von Werkstücken dient, wobei mindestens eine Bearbeitungsstation als Sondermaschine ausgebildet ist, wobei zwischen zwei benachbarten Bearbeitungsstationen (2a, 2b) je eine Transportvorrichtung (4a, 4b) vorgesehen ist, **dadurch gekennzeichnet, dass** die Transportbewegung eines ersten Werkstückes (3) zwischen einer ersten (2a) und zweiten Bearbeitungsstation (2b) unabhängig erfolgt von der Transportbewegung eines zweiten Werkstückes (3a) zwischen der zweiten (2b) und dritten Bearbeitungsstation.

2. Bearbeitungslinie nach Anspruch 1, **dadurch gekennzeichnet, dass** die Transportvorrichtung (4a, 4b) das Werkstück (3) aus der Bearbeitungsstation (2a, 2b) entnimmt und/oder in die Bearbeitungsstation (2a, 2b) beziehungsweise deren Spannvorrichtung (20a, 20b) einsetzt.

3. Bearbeitungslinie nach einem oder beiden der vorhergehenden Ansprüche, **gekennzeichnet durch** eine kombinierte Linear- und Verschwenkbewegung des Werkstückes (3) **durch** die Transportvorrichtung (4a, 4b) und/oder **durch** eine in der Bearbeitungslinie vorgesehene Vielzahl von Transportvorrichtungen (4a, 4b, 4c) und unabhängig voneinander ansteuerbaren Transportvorrichtungen (4a, 4b, 4c) und/oder **dadurch**, dass die Transportvorrichtungen (4a, 4b, 4c) bezüglich der Transportbewegung untereinander koppel- und/oder entkoppelbar vorgesehen sind.

4. Bearbeitungslinie nach einem oder mehreren der vorhergehenden Ansprüche, **gekennzeichnet durch** einen wahlfreien Abstand zwischen den Bearbeitungsstationen (2a, 2b) und/oder unterschiedliche Bearbeitungsstationen (2a, 2b, ...) und/oder Transportvorrichtungen (4a, 4b, ...) und eine räumlich flexible Aufstellbarkeit.

5. Bearbeitungslinie nach einem oder mehreren der vorhergehenden Ansprüche, **dadurch gekennzeichnet, dass** wenigstens eine Transportvorrichtung (4a, 4b, 4c) Mittel aufweist, um das zu transportierende Werkstück (3) in seiner Lage zu verändern und/oder wenigstens eine Transportvorrichtung (4a, 4b, 4c) gleichzeitig als Zwischenablage für wenigstens ein Werkstück (3) vorgesehen ist und/oder die Zwischenablage als Prüfplatz ausgebildet ist.

6. Bearbeitungslinie nach einem oder mehreren der vorhergehenden Ansprüche, **dadurch gekennzeichnet, dass** an der Transportvorrichtung (4a, 4b, 4c) wenigstens ein Mittel zum Messen und/oder Prüfen angeordnet ist und/oder das Mittel zum Messen und/oder Prüfen derart ausgebildet ist, dass es die Prüfung während des Transports von einer Bearbeitungsstation (2a, 2b) zur nächsten auszuführen vermag.

7. Bearbeitungslinie nach einem oder mehreren der vorhergehenden Ansprüche, **dadurch gekennzeichnet, dass** an wenigstens einer Transportvorrichtung (4a, 4b, 4c) Mittel zum Drehen und/oder Verschwenken, zumindest um eine horizontale und/oder vertikale Achse, vorgesehen sind und/oder zumindest in einer Bearbeitungsstation (2a, 2b) ein Rundtisch für die Spannvorrichtung vorgesehen ist.

8. Bearbeitungslinie nach einem oder mehreren der vorhergehenden Ansprüche, **dadurch gekennzeichnet, dass** die Transportvorrichtung (4a, 4b, 4c) wenigstens ein Mittel zum Einsetzen beziehungsweise Entnehmen des Werkstückes aus der Bearbeitungsstation (2a, 2b) oder in die Bearbeitungsstation (2a, 2b) beziehungsweise deren Spannvorrichtung (20a, 20b) aufweist und/oder das Mittel zum Einsetzen und/oder Entnehmen als Greifer ausgebildet ist.

9. Bearbeitungslinie nach einem oder mehreren der vorhergehenden Ansprüche, **dadurch gekennzeichnet, dass** die Bearbeitungsstationen (2a, 2b) in einem unterschiedlichen, frei wählbaren Abstand zueinander angeordnet sind und/oder die Transportvorrichtung (4a, 4b, 4c) zwei lineare, orthogonal zueinander angeordnet Achsen aufweist, um Bewegungen des Werkstückes (3) in diese Richtungen auszuführen und/oder ein Kreuztisch vorgesehen ist, der die zweite orthogonale Achse zur Verfügung stellt und/oder sich die Transportvorrichtungen (4a, 4b, 4c) über an den Bearbeitungsstationen (2a, 2b) vorgesehenen Konsolen (21) abstützen.

10. Transportvorrichtung für eine Bearbeitungslinie nach einem oder mehreren der vorhergehenden Ansprüche, wobei die Transportvorrichtung (4a, 4b, ...) mindestens einen, auf einer Führungsschiene (40) positionierbaren Schlitten (42a, 42b) und einen anheb- beziehungsweise absenkbaren, insbesondere verschwenkbaren Tragarm (44) aufweist und der Tragarm das Werkstück (3) hält.

11. Transportvorrichtung für eine Bearbeitungslinie, wobei die Transportvorrichtung (4a, 4b, ...) mindestens einen, auf einer Führungsschiene (40) positionierbaren Schlitten (42a, 42b) und einen anheb- beziehungsweise absenkbaren, insbesondere verschwenkbaren Tragarm (44) aufweist und der Tragarm das Werkstück (3) hält, **dadurch gekennzeichnet, dass** ein Drehgelenk (60) vorgesehen ist, welches unterhalb einer Führungsschiene (40) vorgesehen ist und eine Sockelplatte (63) eines Sockels (41) einen ersten Teil des Drehgelenks aufnimmt und auf der den Schlitten (42a, 42b) abgewandten Seite der andere Teil des Drehgelenks angeordnet ist.

12. Transportvorrichtung nach Anspruch 10, **dadurch gekennzeichnet, dass** eine Führungsschiene (40) vorgesehen ist, über die bevorzugt über die Schlitten (42a, 42b) ein Sockel linear in Richtung (400) bewegbar ist.

13. Transportvorrichtung nach einem oder mehreren der vorhergehenden Ansprüche 10 und 12, **dadurch gekennzeichnet, dass** ein Antrieb (43) für den Sockel (41) vorgesehen ist und der Antrieb (43) bevorzugt unterhalb der Führungsschiene (40) angeordnet ist und/oder als Antrieb (43) eine Kugelrollspindel, ein Riemen-, Band- beziehungsweise Kettenantrieb oder dergleichen vorgesehen ist und/oder der Tragarm (44) vorgesehen ist, der bevorzugt aus zwei parallel zueinander angeordneten Tragarmstäben (45a, 45b) gebildet ist.

14. Transportvorrichtung nach einem oder mehreren der vorhergehenden Ansprüche 10 bis 13, **dadurch gekennzeichnet, dass** der Tragarm (44) Mittel zum direkten und/oder indirekten Halten des Werkstückes (3) aufweist und/oder der Tragarm (44) schwenkbar ausgebildet ist.

15. Transportvorrichtung nach einem oder mehreren der vorhergehenden Ansprüche 10 bis 14, **dadurch gekennzeichnet, dass** der Tragarm (44) in seiner Höhe mittels einer am Sockel (41) angeordneten Kreuzschlittenführung verstellbar ist und/oder die Tragarmstäbe (45a, 45b) Teil einer Parallelogrammführung des Aufnahmetisches (47) sind und/oder die Tragarmstäbe (45a, 45b) in Sockelgelenken (46a, 46b) im Sockel (41) gelenkig gelagert sind.

16. Transportvorrichtung nach einem oder mehreren der vorhergehenden Ansprüche 10 bis 15, **dadurch gekennzeichnet, dass** zwei Tischgelenke (48a, 48b) vorgesehen sind, durch die die Tragarmstäbe (45a, 45b) mit dem Aufnahmetisch (47) gelenkig verbunden sind und/oder der Abstand der Sockelgelenke (46a, 46b) dem Abstand der Tischgelenke (48a, 48b) entspricht und/oder ein Verschwenkantrieb vorgesehen ist, über den der Tragarm (44) entlang einer Schwenklinie (401) gesteuert verschwenkbar und positionierbar ist.

17. Transportvorrichtung nach einem oder mehreren der vorhergehenden Ansprüche 10 bis 16, **dadurch gekennzeichnet, dass** wenigstens eine Positionierhilfe (49) am Aufnahmetisch (47) vorgesehen ist, die mit den Werkstücken (3) zusammenwirkt für einen sicheren Halt des Werkstückes (3), insbesondere während des Transfers und/oder zwischen dem Sockel (41) und den Schlitten (42a, 42b) ein Drehgelenk (60) vorgesehen ist, mittels dessen der Sockel (41) mit dem daran angeordneten Tragarm (44) um eine vertikal orientierte Drehachse (62) drehbar ist und/oder die Schlitten (42a, 42b) durch eine Verbindungsplatte (61) miteinander verbunden sind.

18. Transportvorrichtung nach einem oder mehreren der vorhergehenden Ansprüche 10 bis 17, **dadurch gekennzeichnet, dass** die Verbindungsplatte (61) einen Teil des Drehgelenks (60) trägt und der andere Teil des Drehgelenks auf der Unterseite des Sockels angeordnet ist und/oder die Tragarmstäbe (45a, 45b) abgekröpft sind oder Aussparungen aufweisen.

19. Transportvorrichtung nach einem oder mehreren der vorhergehenden Ansprüche 10 bis 18, **dadurch gekennzeichnet, dass** das Drehgelenk (60) unterhalb der Führungsschiene (40) vorgesehen ist und eine Sockelplatte (63) den ersten Teil des Drehgelenks (60) aufnimmt, wobei auf der den Schlitten (42a, 42b) abgewandten Seite der Führungsschiene (40) der andere Teil des Drehgelenks angeordnet ist.

20. Transportvorrichtung nach einem oder mehreren der vorhergehenden Ansprüche 10 bis 19, **gekennzeichnet durch** eine hängende Anordnung der Schlitten (42a, 42b) an der Führungsschiene (40) und/oder die Schlitten (42a, 42b) **durch** einen stehenden Aufbau auf der Führungsschiene (40) zu gleiten vermögen.
